# FASCICULE DE BREVET EUROPEEN

(11) **EP 0 611 715 B1**
(45) Date de publication et mention de la délivrance du brevet: **20.05.1998**
(21) Numéro de dépôt: 94440007.6
(22) Date de dépôt: 03.02.1994
(51) Int. Cl.: B65H 18/06

(54) **Palier destiné à porter l'une des extrémités d'une barre enrouleuse, en vue de l'enroulement ou du déroulement de nappes de matériaux**
Lager zur Aufnahme eines Endes einer Wickelwelle zum Auf- oder Abwickeln von Werkstoffbahnen
Bearing for supporting one and of a winding bar for winding or unwinding webs of material

(30) Priorité: 09.02.1993 FR 9301639; 10.03.1993 FR 9302925
(43) Date de publication de la demande: 24.08.1994
(73) Titulaire: ETS. CHRISTIAN GUTTIN Sarl, 38490 Les Abrets (FR)
(72) Inventeur: Guttin, Christian, F-38490 Les Abrets (FR)
(74) Mandataire: Arbousse-Bastide, Jean-Claude Philippe

(56) Documents cités:
- EP-A- 0 237 635
- EP-A- 0 348 806
- DE-A- 3 127 553
- GB-A- 1 136 137
- GB-A- 2 056 620
- US-A- 2 954 182
- US-A- 3 246 858
- US-A- 4 105 171

## Description

La présente invention a pour objet, dans le domaine de la fabrication textile, un palier destiné à porter l'une des extrémités d'une barre enrouleuse, en vue de l'enroulement ou du déroulement de nappes de matériaux, et comportant un siège obturable par déplacement d'un volant.

Parmi les paliers de ce type connus à ce jour, notamment du document GB-A-2 056 620, les paliers à bascule comportent généralement un axe mobile en rotation dans un corps fixe dont une extrémité est solidarisée à un organe moteur et dont l'autre comprend d'une part un siège généralement garni d'une pièce d'usure, et d'autre part un volant basculable autour d'un axe perpendiculaire à l'axe de rotation, apte à venir couvrir l'extrémité, de section généralement carrée, de la barre enrouleuse déposée dans ledit siège, en vue du blocage de celle-ci.

Dans ce type de paliers la pièce d'usure du siège est généralement en forme de V et comporte deux faces à angle droit contre lesquelles viennent prendre appui deux faces de l'extrémité de la barre enrouleuse, les deux autres faces étant recouvertes l'extrémité de la barre enrouleuse, les deux autres faces étant recouvertes partiellement par une pièce d'usure en forme de V, à deux faces perpendiculaires, solidaire par vissage du volant basculable.

Les paliers existants présentent divers inconvénients. En effet le volant est généralement réalisé en fonte, ce qui nécessite que les vis de solidarisation des pièces d'usure soient vissées dans celles-ci, et donc que le vissage soit réalisé par derrière le volant. De plus les pièces d'usure sont, préalablement au vissage, goupillées afin d'être maintenues en place et l'enlèvement de ces goupilles ne peut être réalisé que par derrière. Ceci entraîne la nécessité de déposer le volant pour remplacer les pièces d'usure, ce qui est relativement fréquent.

Or la dépose du volant nécessite l'enlèvement de la tige constituant l'axe de basculement. Du fait des efforts auxquels est soumis le palier, cette tige a tendance à flamber, ce qui en rend l'enlèvement malaisé, et même parfois impossible, le palier devant alors être entièrement déposé et remplacé, avec pour conséquence une immobilisation de l'installation.

De plus les pièces d'usure, notamment la pièce supérieure, s'usent rapidement, étant extrêmement sollicitées du fait de leur positionnement et de leur architecture.

La présente invention vise à remédier à ces inconvénients en proposant un palier dont la conception permet une dépose facile du volant et un remplacement aisé et rapide des pièces d'usure.

Le palier objet de la présente invention se caractérise essentiellement d'une part en ce qu'il est réalisé en acier, les vis maintenant les pièces d'usure étant vissées de manière à être accessibles sans avoir à déposer le volant ; et d'autre part en ce que la pièce d'usure garnissant le siège comporte un logement en U, la pièce d'usure de recouvrement solidaire du volant étant plane .

Selon un mode de réalisation du palier selon l'invention, afin d'éviter le flambage de l'axe de pivotement, celui-ci est constitué de deux axes épaulés et partiellement filetés, vissés dans le volant et dont les parties non filetées sont engagées dans des orifices pratiqués dans l'extrémité de l'axe de rotation, de part et d'autre du siège, la mise en oeuvre de ces deux axes permettant un démontage facile du volant.

Les avantages et les caractéristiques de la présente invention ressortiront plus clairement de la description qui suit et qui se rapporte au dessin annexé, lequel en représente divers modes de réalisation non limitatifs.

Dans le dessin annexé :
- la figure 1 représente une vue en perspective et en éclaté d'un palier à bascule selon l'invention.
- la figure 2 représente une vue en perspective de la pièce d'usure inférieure du même palier.
- la figure 3 représente une vue en perspective de la pièce d'usure supérieure du même palier.
- la figure 4 représente une vue en coupe partielle du même palier.

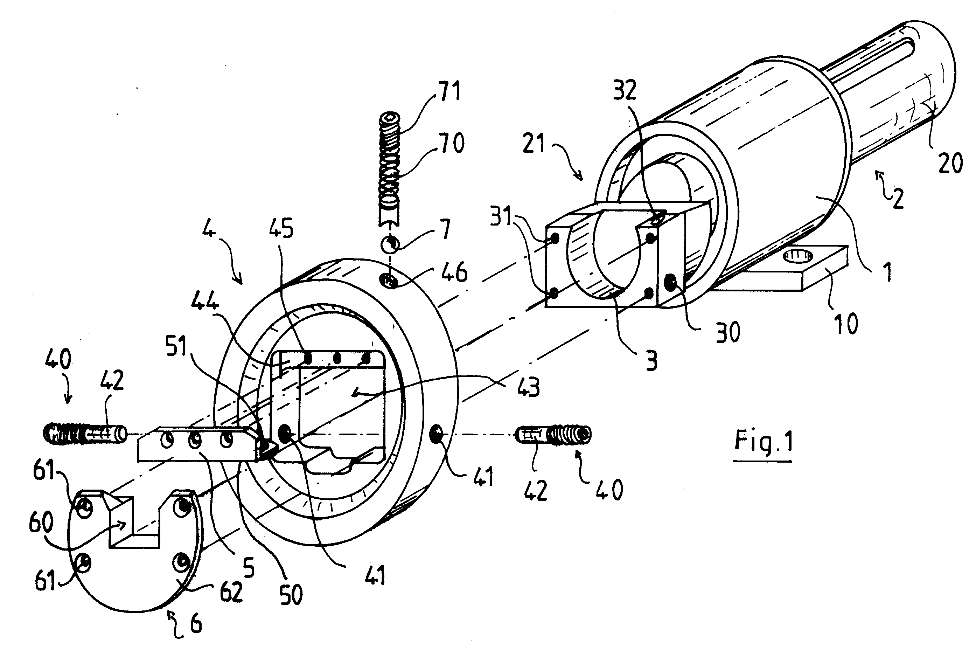

Si on se réfère à la figure 1 on peut voir que dans ce premier mode de réalisation, un palier à bascule selon l'invention comporte un corps de palier 1 auquel est solidarisé un socle 10 permettant sa solidarisation au bâti de la machine. Le corps de palier 1 est traversé axialement par un axe 2 dont l'extrémité arrière 20 est destinée à être reliée à un organe moteur, non représenté, et dont l'extrémité avant 21 comporte un siège 3.

Un volant 4 est solidarisé à l'extrémité 21 de l'axe 2, monté pivotant autour d'un axe perpendiculaire à l'axe de rotation et excentré, par l'intermédiaire de deux axes épaulés 40 partiellement filetés, vissés dans des orifices 41 pratiqués en regard dans la périphérie du volant 4, et dont les extrémités non filetées 42 sont introduites dans des orifices 30, dont un seul est visible sur la figure, pratiqués de part et d'autre du siège 3 dans l'extrémité 21 de l'axe 2, laquelle est introduite dans un logement 43 pratiqué dans le volant 4.

Le logement 43 comporte dans son bord supérieur une feuillure 44 dont le fond est percé d'orifices filetés 45 permettant la solidarisation par vissage d'une pièce d'usure supérieure 5 de section en L de manière à envelopper la feuillure 44, et présentant une face de contact 50 plane.

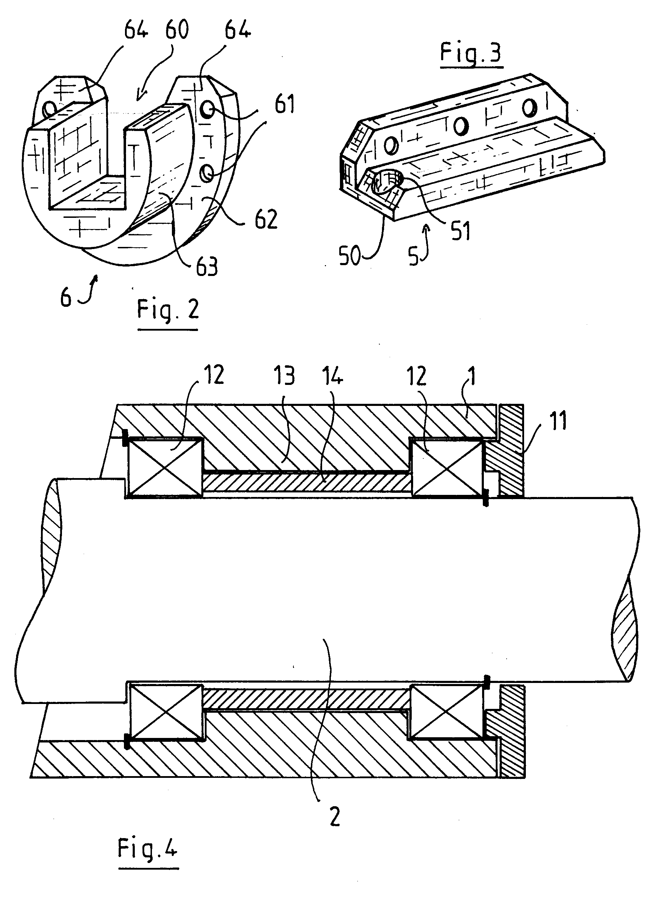

Si on se réfère également à la figure 3 on peut voir que la pièce d'usure 5 comporte des bords latéraux biseautés permettant un positionnement plus aisé dans la feuillure 44.

Une pièce d'usure inférieure 6, comportant un logement 60 en U, est solidarisée par vissage à l'extrémité 21 de l'axe 2 dans laquelle sont pratiqués des orifices filetés 31, les vis, non représentées, étant introduites dans des orifices 61 percés dans une plaque 62 couvrant les bords du logement 43 du volant 4.

Si on se réfère également à la figure 2, on peut voir que cette pièce d'usure 6 comporte une partie arrière 63 apte à s'insérer dans le siège 3, le siège 3 et la partie arrière 63 étant cylindriques et concentriques à l'axe 2 de manière à permettre un positionnement aisé de la pièce d'usure 6 avant sa solidarisation par vissage.

La plaque 62 déborde vers le haut le logement 43 de manière à venir recouvrir la pièce d'usure supérieure 5, laquelle peut reposer sur la partie arrière 63 lors de sa solidarisation au volant 4. Avantageusement, ces débordements 64 sont biseautés afin de faciliter la mise en place de l'extrémité de la barre enrouleuse.

Le blocage du volant 4 sur l'extrémité 21 de l'axe 2 est assuré par une bille 7 introduite dans un orifice excentré 46 pratiqué dans le volant 4 et débouchant en regard d'un orifice 51 percé dans la pièce d'usure supérieure 5 et disposé lui-même, lorsque le volant est en position fermée, en regard d'une cavité 32 pratiquée à la face supérieure de l'extrémité 21 de l'axe 2, la bille 7 étant maintenue par un ressort 70 et une vis 71 vissée dans l'orifice 46, qui est en partie fileté.

Ce moyen de blocage équipe certains paliers à bascule existants, mais on tend à le remplacer par d'autres car le blocage qu'il assure n'est pas suffisant. La raison en est que la cavité 32 ne peut être assez profonde du fait du passage à proximité d'une des vis de fixation de la pièce d'usure inférieure. Or cette position de la vis ne peut être modifiée puisque tenant à la forme de la pièce d'usure et à la place prise par l'axe de basculement du volant.

Dans le dispositif selon l'invention, l'axe de basculement n'étant pas traversant et la pièce d'usure plus enveloppante il est possible d'avoir une vis de fixation plus basse permettant de réaliser une cavité 32 plus profonde assurant un meilleur blocage.

Il convient par ailleurs de souligner que les barres enrouleuses peuvent avoir des extrémités de section autre que carrée, notamment de section triangulaire, auquel cas il suffit de remplacer la pièce d'usure inférieure, et non les deux pièces d'usure comme c'est le cas avec les paliers à bascule existants.

Dans le dispositif selon l'invention, de manière avantageuse, les pièces d'usures 5 et 6 peuvent être déposées par devant sans nécessité de démonter le volant 4, qui est par ailleurs aisément démontable.

Si on se réfère ensuite à la figure 4 on peut voir que le corps de palier 1 est fermé à l'arrière par un flasque 11, et qu'il renferme deux roulements 12 montés de part et d'autre d'un épaulement interne 13, et séparés par une entretoise 14. Ainsi les efforts longitudinaux transmis à l'axe 2 sont supportés par l'épaulement 13 du corps 1 et non par le flasque 11 comme c'est le cas des paliers bascules existants qui ne comportent pas d'épaulement.

## Revendications

1. Palier destiné à porter l'une des extrémités d'une barre enrouleuse, en vue de l'enroulement ou du déroulement de nappes de matériaux, comportant un corps (1), un axe de rotation (2), un siège (3) obturable par déplacement d'un volant (4), ainsi que deux pièces d'usure (5, 6), une pièce d'usure inférieure (6) à logement (60) en U solidarisable par vissage à l'extrémité (21) de l'axe (2), et une pièce d'usure supérieure (5) dont la face de contact (50) avec la barre enrouleuse est plane, caractérisé d'une fait en ce que les dits corps (1), axe de rotation (2) et volant (4) sont réalisés en acier; d'autre fait en ce que la pièce d'usure supérieure (5) est à section en L, sa face non en contact avec la barre enrouleuse étant solidarisable par vissage au volant (4), dans une feuillure (44) ménagée dans le bord supérieur d'un logement (43) pratiqué dans ledit volant (4) et destiné à abriter l'extrémité (21) de l'axe (2).

2. Palier selon la revendication 1, caractérisé en ce que la pièce d'usure inférieure (6) comporte de part et d'autre du logement en U (60) des parties débordantes (64) destinées à venir recouvrir la pièce d'usure supérieure (5, 105).

3. Palier selon la revendication 1 ou la revendication 2, caractérisé en ce que la partie arrière (63) de la pièce d'usure inférieure (6) adaptable à l'extrémité (21) de l'axe (2), ainsi que le siège (3) destiné à recevoir ladite partie arrière (63) sont cylindriques, concentriques à l'axe (2).

4. Palier selon l'une quelconque des revendications précédentes, caractérisé en ce que le blocage du volant (4) sur l'extrémité (21) de l'axe (2) est assuré par une bille (7) introduite dans un orifice excentré (46) pratiqué dans le volant (4) et débouchant en regard d'un orifice (51) percé dans la pièce d'usure supérieure (5) et disposé lui-même, lorsque le volant est en position fermée, en regard d'une cavité (32) pratiquée à la face supérieure de l'extrémité (21) de l'axe (2), la bille (7) étant maintenue par un ressort (70) et une vis (71) vissée dans l'orifice (46), qui est partiellement fileté.

5. Palier selon l'une quelconque des revendications précédentes, caractérisé en ce que le corps (1) de palier comporte intérieurement un épaulement interne (13).

6. Palier selon l'une quelconque des revendications précédentes, caractérisé en ce que le volant (4) est monté pivotant sur l'extrémité (21) de l'axe de rotation (2) autour de deux axes épaulés (40), filetés partiellement, vissés dans le volant (4) en périphérie de celui-ci, et dont les parties non filetées (42) sont introduites dans des orifices (30) pratiqués dans ladite extrémité (21) de l'axe de rotation (2).

## Claims

1. Bearing for supporting one end of a winding bar for winding or unwinding webs of material and comprising a body (1), a rotational axis (2), a seat (3) able to be closed off via the movement of a steering wheel (4), as well as two expendable parts (5, 6), one lower expendable part (6) with a U-shaped housing (60) able to be rendered integral by screwing at the end (21) of the axis (2), and an upper expendable part (5) whose face (50) for making contact with the winding bar is flat, said bearing being firstly characterised in that said body (1) rotational axis (2) and steering wheel (4) are made of steel, and secondly in that the upper expendable part (5) has an L-shaped section whose face not in contact with the winding bar is rendered integral via screwing to the steering wheel (4) in a rabbet (44) fitted in the upper edge of a housing (43) made in said steering wheel (4) and intended to house the end (21) of the axis (2).

2. Bearing according to claim 1, characterised in that the lower expendable part (6) comprises on both sides of the U-shaped housing (60) projecting portions (64) for covering the upper expendable part (5, 105).

3. Bearing according to claim 1 or 2, characterised in that the rear portion (63) of the lower expendable part (6) able to be adapted to the end (21) of the axis (2), as well as the seat (3) for receiving said rear portion (63), are cylindrical and concentric to the axis (2).

4. Bearing according to any one of the preceding claims, characterised in that the locking of the steering wheel (4) on the end (21) of the axis (2) is ensured by a ball (7) introduced into an orifice moved out of centre (46) made in the steering wheel (4) and projecting opposite an orifice (51) pierced in the upper expendable part (5) and, when the steering wheel is in a closed position, is disposed opposite a cavity (32) made to the upper face of the end (21) of the axis (2, the ball (7) being supported by a spring (70) and a screw (71) screwed into the orifice (46) which is partially threaded.

5. Bearing according to any one of the preceding claims, characterised in that the bearing body (1) internally comprises an internal shoulder (13).

6. Bearing according to any one of the preceding claims, characterised in that the steering wheel (4) is mounted pivoting on the end (21) of the rotational axis (2) around two shouldered axes (40) and partially threaded and screwed into the steering wheel (4) at the periphery of the latter and whose non-threaded portions (42) are introduced into orifices (30) made in said end (21) of the rotational axis (2).

## Patentansprüche

1. Lager zur Aufnahme eines Endes einer Wickelwelle zum Auf- oder Abwickeln von Werkstoffbahnen mit einem Körper (1), einer Drehachse (2), einem durch Verlagern eines Schwungrings (4) und zwei Verschleißteilen (5, 6), nämlich einem unteren Verschleißteil (6) mit U-förmiger, mit dem Ende (21) der Achse 2) verschraubbare Aufnahme (60) und einem oberen Verschleißteil (5), dessen Berührungsfläche (60) zur Wickelwelle plan ist, verschließbaren Sitz (3), dadurch gekennzeichnet, daß einerseits der Körper (1), die Drehachse (2) und der Schwungring (4) aus Stahl gefertigt sind und andererseits das obere verschleißteil (5) einen L-förmigen Querschnitt aufweist, dessen nicht mit der Wickelwelle in Berührung stehende Seite mit dem Schwungring (4) über einen in dem Schwungring (4) angebrachten Falz (44) verschraubbar ist, mit dem Zweck, das Ende (21) der Achse (2) zu schützen.

2. Lager nach Patentanspruch 1, dadurch gekennzeichnet, daß das untere Verschleißteil (6) beidseits der U-förmigen Aufnahme (60) Überstände (64) aufweist, die dazu dienen, das obere verschleißteils (5, 105) zu überdecken.

3. Lager nach Patentanspruch 1 oder 2, dadurch gekennzeichnet, daß das rückseitige Teil (63) des an das Ende (21) der Achse (2) anpaßbaren unteren Verschleißteils (6) sowie der zur Aufnahme des rückseitigen Teils (63) bestimmte Sitz (3) zylindrisch und achsgleich zur Achse 2 angeordnet sind.

4. Lager nach einem der obigen Patentansprüche, dadurch gekennzeichnet, daß die Blockierung des Schwungrings (4) am Ende (21) der Achse (2) durch eine Kugel (7) erfolgt, die in einer im Schwungring (4) angebrachten und einer im oberen Verschleißteil (5) angebrachten Öffnung (51) gegenüberliegenden exzentrischen Öffnung (46) liegt, wobei die Öffnung (51) bei geschlossenem Schwungring (4) einer in der Oberseite des Endes (21) der Achse (2) angebrachten Vertiefung (32) gegenüberliegt und die Kugel (7) mit einer Feder (71) und einer in die teilweise mit einem Innengewinde versehene Öffnung (46) eingedrehten Schraube (71) festgehalten wird.

5. Lager nach einem der obigen Patentansprüche, dadurch gekennzeichnet, daß der Körper (1) des Lagers im Inneren eine Schulter (13) besitzt.

6. Lager nach einem der obigen Patentansprüche, dadurch gekennzeichnet, daß der Schwungring (4) am Ende (21) der Drehachse (2), um zwei teilweise mit einem Gewinde versehene Schwenkachsen (40) drehbar angeordnet ist, wobei die Schwenkachsen (40) von außen in den Schwungring (4) eingeschraubt sind, während ihre gewindefreien Enden (42) in den im Ende (21) der Drehachse (2) angebrachten Öffnungen (30) stecken.
